# EUROPEAN PATENT APPLICATION

(11) **EP 1 750 424 A1**
(43) Date of publication of application: **07.02.2007**
(21) Application number: 06117877.8
(22) Date of filing: 26.07.2006
(51) Int. Cl.: H04M 3/56, H04M 7/00

(54) **Method and apparatus for rerouting a teleconference call setup message in a packet network**

(30) Priority: 02.08.2005 US 194978
(71) Applicant: AT&T Corp., New York, NY 10013-2412 (US)
(72) Inventor: Croak, Marian, Fair Haven, CA 07704 (US); Eslambolchi, Hossein, Los Altos Hills, CA 94022 (US)
(74) Representative: Asquith, Julian Peter

(57) **Abstract**

A method and apparatus for redirecting at least one call to avoid at least one congested link of a switch in a packet network is described. In one embodiment, the at least one call setup message is intended to be routed via a first link to the switch in communication with a conferencing component. However, a call blocking condition at the first link is detected. In response, the at least one call setup message is redirected via a second link to said switch to participate in said conferencing component.

## Description

### BACKGROUND OF THE INVENTION

### Field of the Invention

Embodiments of the present invention generally relate to telecommunications systems and, more particularly, to a method and apparatus for rerouting a teleconference call setup message in a packet network.

### Description of the Related Art

Generally, telecommunications systems provide the ability for two or more people or machines (e.g., computerized or other electronic devices) to communicate with each other. A telecommunications system may include various networks for facilitating communication that may be generally organized into packet networks and circuit-switched networks. An exemplary circuit-switched network includes a plain old telephone system (POTS), such as the publicly switched telephone network (PSTN). Exemplary packet networks include internet protocol (IP) networks, asynchronous transfer mode (ATM) networks, frame-relay networks, and the like. One type of packet network is a voice-over-internet protocol (VoIP) network, which can provide a multitude of conventional phone services to customers due to its versatile nature. One such service that may be provided over a VoIP network is a conference bridge service. Although providing a conference bridge service may be accomplished with high level of effectiveness, the network may experience problems on occasion.

For instance, a conference bridge is typically positioned in close proximity to a switch that is used as the final interconnect point between the calls traversing the network and the conference bridge. During mass calling conferences, certain links into and out of these bridges can become congested due to the number of customers requesting to participate in the teleconference. This situation is problematic since potential participants may be denied the opportunity to join the conference call.

Thus, there is a need in the art for a method and apparatus for rerouting call setup messages from congested links existing in a packet network.

### SUMMARY OF THE INVENTION

In one embodiment, a method and apparatus for redirecting at least one call to avoid at least one congested link of a switch in a packet network is described. More specifically, the at least one call setup message is intended to be routed via a first link to the switch in communication with a conferencing component. However, a call blocking condition at the first link is detected. In response, the at least one call setup message is redirected via a second link to said switch to participate in said conferencing component.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

FIG. 1 is a block diagram depicting an exemplary embodiment of a communication system in accordance with the invention;

FIG. 2 is a block diagram depicting an exemplary configuration of the communication system of FIG. 1 constructed in accordance with one or more aspects of the invention;

FIG. 3 is a flow diagram depicting an exemplary embodiment of a method for rerouting a call setup message in a packet network in accordance with one or more aspects of the invention; and

FIG. 4 is a block diagram depicting an exemplary embodiment of a computer suitable for implementing the processes and methods described herein.

### DETAILED DESCRIPTION

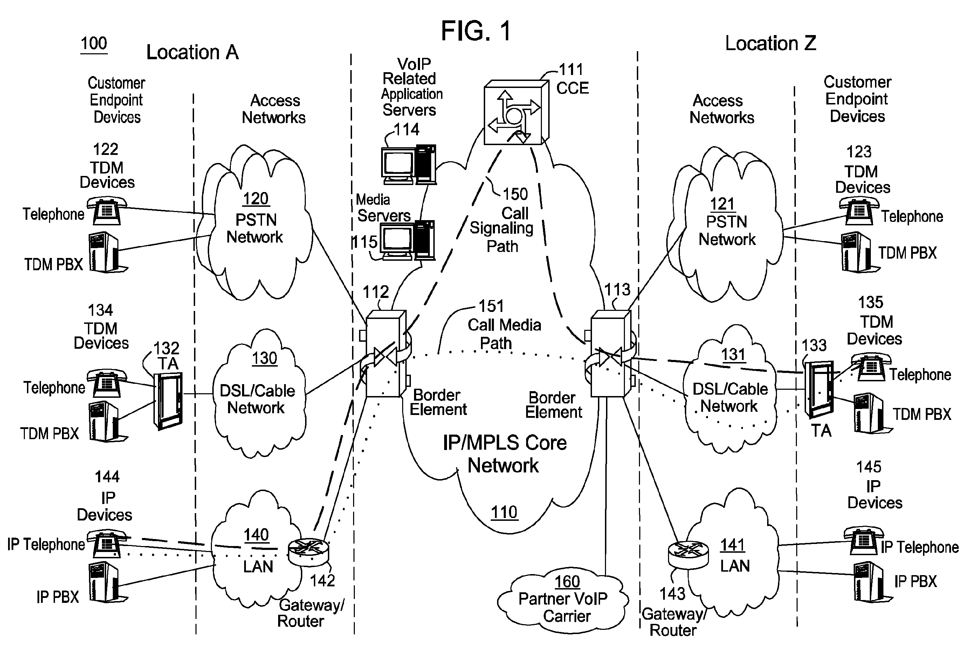

To better understand the present invention, FIG. 1 illustrates an example network, e.g., a packet network such as a VoIP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VoIP network or a SoIP (Service over Internet Protocol) network is considered an IP network.

In one embodiment, the VoIP network may comprise various types of customer endpoint devices connected via various types of access networks to a carrier (a service provider) VolP core infrastructure over an Internet Protocol/Multi-Protocol Label Switching (IP/MPLS) based core backbone network. Broadly defined, a VoIP network is a network that is capable of carrying voice signals as packetized data over an IP network. The present invention is described below in the context of an illustrative VoIP network. Thus, the present invention should not be interpreted to be limited by this particular illustrative architecture.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and145 typically comprise IP phones or IP PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VoIP services by using either a Public Switched Telephone Network (PSTN) 120, 121 or a broadband access network 130, 131 via a TA 132 or 133. IP based customer endpoint devices access VoIP services by using a Local Area Network (LAN) 140 and 141 with a VoIP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VolP gateway and router 142. A packet based access network 130 or 131, such as DSL or Cable, when used together with a TA 132 or 133, is used to support TDM based customer endpoint devices.

The core VoIP infrastructure comprises of several key VoIP components, such as the Border Elements (BEs) 112 and 113, the Call Control Element (CCE) 111, VoIP related Application Servers (AS)114, and Media Server (MS) 115. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller or a softswitch and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VoIP related Application Servers (AS) in order to complete a call that require certain service specific features, e.g. translation of an E.164 voice network address into an IP address and so on.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VoIP calls, they can be handled via the Partner IP carrier interface 160 to the other carrier.

In order to illustrate how the different components operate to support a VoIP call, the following call scenario is used to illustrate how a VoIP call is setup between two customer endpoints. A customer using IP device 144 at location A places a call to another customer at location Z using TDM device 135. During the call setup, a setup signaling message is sent from IP device 144, through the LAN 140, the VoIP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VoIP service related application server 114 to obtain the information to complete this call. In one embodiment, the Application Server (AS) functions as a back-to-back user agent. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP 200 OK response message if SIP is used, is sent in the reverse direction back to the CCE 111. After the CCE 111 receives the call acknowledgement message, it will then send a call acknowledgement signaling message, such as a SIP 200 OK response message if SIP is used, toward the calling party. In addition, the CCE 111 also provides the necessary information of the call to both BE 112 and BE 113 so that the call data exchange can proceed directly between BE 112 and BE 113. The call signaling path 150 and the call media path 151 are illustratively shown in FIG. 1. Note that the call signaling path and the call media path are different because once a call has been setup up between two endpoints, the CCE 111 does not need to be in the data path for actual direct data exchange.

Media Servers (MS) 115 are special servers that typically handle and terminate media streams, and to provide services such as announcements, bridges, transcoding, and Interactive Voice Response (IVR) messages for VoIP service applications.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

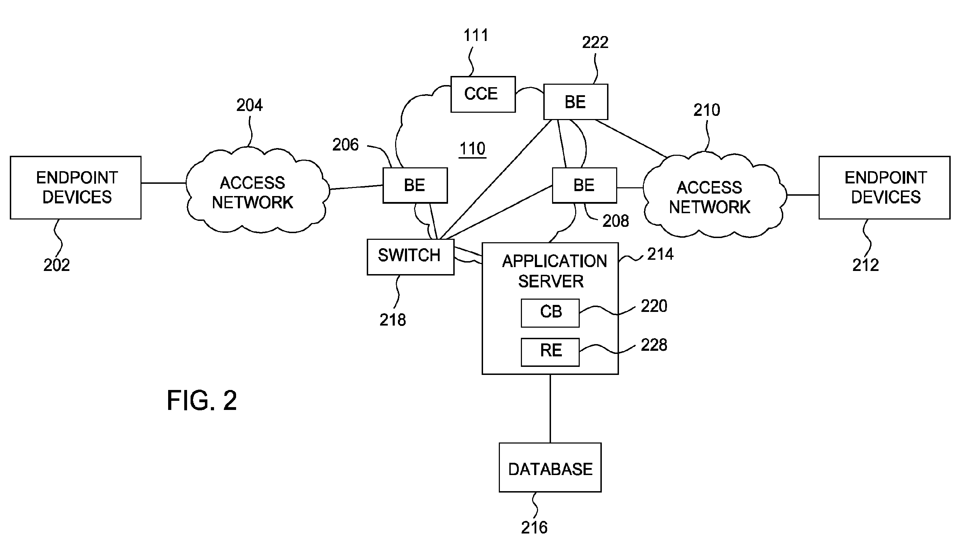

FIG. 2 is a block diagram depicting an exemplary configuration of the communication system of FIG. 1 constructed in accordance with one or more aspects of the invention. A plurality of endpoint devices 202 re configured for communication with the core network 110 via an access network 204 and border element (BE) 206. A plurality of endpoint devices 212 are configured for communication with the core network 110 via an access network 210, BE 208, and BE 222. The endpoint device 202 and the endpoint device 212 may comprise any of the customer endpoint devices described above (e.g., TDM devices, IP devices, etc.). The access networks 204 and 210 may comprise any of the access networks detailed above (e.g., PSTN, DSL/Cable, LAN, etc). The core network 110 further includes a switch 218 in communication with an application server 214. The switch 218 may be any network component that receives incoming data and determines a destination address. In one embodiment of the present invention, the switch 218 comprises the final network component a call setup message traverses before connecting to a conference bridge 220.

In one embodiment of the present invention, the conference bridge 220 may reside on a network application server 214. The conference bridge 220 may be a software component that enables the application server 214 to receive a plurality of call setup messages requesting to join a particular teleconference. More specifically, the conference bridge 220 establishes the conference call by amplifying, balancing, and linking the conference call so every participant can hear and speak to each other. In another embodiment, the conference bridge is a stand alone hardware component or a telecommunications facility as opposed to being stored in an application server 214.

The present invention allows call setup messages traversing a packet network (e.g., VolP network) and destined for a conference bridge 220 to be automatically rerouted in the event a link connected to the final switch 218 is congested. As opposed to accommodating conventional traffic that involves endpoint devices positioned at various locations within the network, network components may have difficulty handling a multitude of call setup messages requesting a single switch during a short period of time (e.g., the start of a teleconference). In one embodiment, the packet network provides a set of alternative paths for the call setup message to take to reach the final switch and the conference bridge. Notably, if the call setup message encounters a congested link to the switch, the CCE 111 will supply alternative routes for the border elements to attempt before allowing the call to fail due to call blocking. In one embodiment, the CCE 111 transmits a request for a set of prospective routes that can be used to reach a particular switch (e.g., switch 218) that is associated with the requested conference bridge specified by a call setup message. The prospective routes may be routes that exhibit certain qualities or factors desired by the customer.

These prospective routes may initially be determined by a routing engine 228 and subsequently stored in a database 216 for future use. The routing engine 228 (whether in the CCE 111 or server 214), may be configured to collect call detail records (CDRs), which can be used to help determine the alternative routes, from the network elements in the core network 110 (e.g., BE 206, BE 208, BE 222, the CCE 111). Moreover, the routing engine 228 may deploy probes into the network to obtain the link performance data that can also be utilized to determine alternative routes.

The routing engine responds to the CCE 111 by selecting a route from a plurality of prospective routes based on the border elements that are connected to the switch 218. This procedure may be executed before or after the call is made by the subscriber.

One exemplary scenario may include a call originating on a PSTN network that is destined for a conference bridge 220 in a VoIP network. A call setup message is initially received by a CCE 111. The CCE 111 then directs the call setup message to BE 208 in order to connect with switch 218, which links the conference bridge to the network. The CCE 111 will continue to route calls to the switch 218 in this manner (or via a closer BE if a call setup message is initially received at another network location) until congestion or a call blocking condition occurs on a link that is being used. For example, the link existing between BE 208 and switch 218 may become congested due to calls exceeding the capacity of the connecting communication link. In this instance, BE 208 would detect the congestion and notify the CCE 111 of the situation. In one embodiment, the CCE 111 responds by providing the BE 208 a set of alternative paths for the call to use in order to connect to the conference bridge. Namely, the CCE 111 would place the blocked call on hold while making an attempt to determine an alternative route to reach the conference bridge. The CCE 111 then determines that BE 222 is available and can direct the calls to the switch 218 via BE 222 instead.

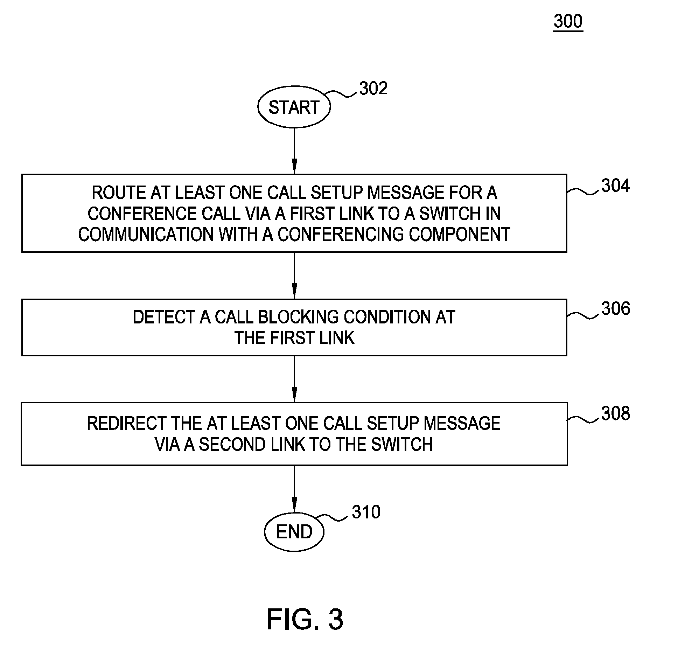

FIG. 3 is a flow diagram depicting an exemplary embodiment of a method 300 for redirecting calls to avoid congested links that connect to a switching device in a packet network as related to one or more aspects of the present invention. The method 300 begins at step 302. At step 304, at least one call setup message is intended to be routed via a first link to a switch 218 that is in communication with a conference bridge application 220. In one embodiment, a CCE 111 routes a call setup message to the "final" switch 218 from a border element via a particular link after receiving a call setup message from an endpoint device (e.g., endpoint device 202). The "final" switch is the last switch a call requesting access to a teleconference traverses before reaching the conference bridge 220 (e.g., the switch may be positioned to be the last network component that connects the conference bridge 220 to the network).

At step 306, a call blocking condition at the first link of the switch is detected. Notably, the switch 218 is capable of receiving a multitude of calls that request to establish communication with the associated conference bridge application 220. However, on occasion, the number of calls requesting a connection with the conference bridge 220 may overwhelm a particular link that is coupled to the switch 218, thus creating a call blocking condition (i.e., congestion). In one embodiment, the switch 218 or a border element detects that the number of calls attempting to establish a connection with the conference bridge 220 exceeds a predefined threshold. This information is then provided to the CCE 111 by the network component that detected the congestion.

At step 308, the at least one call setup message is redirected to the switch 218 via a second link. In one embodiment, the CCE 111, upon notification from the detecting border element or switch, redirects the call setup message to the same switch using a different (and uncongested) link. More specifically, the CCE 111 provides a list of alternative routes that terminate at the switch 218 to a neighboring border element. For example, suppose the link between border element 208 and switch 218 becomes congested with a significant number of calls. The CCE 111 would then provide a list of alternative routes that terminate at the switch 218 to the border element 208. For instance, border element 208 may redirect calls to border element 222, which in turn routes the calls to switch 218 on a non-congested route or link. Consequently, the call will be able to quickly establish a connection with the desired conference bridge. Although only two border elements are described in this example, those skilled in the art realize that a route utilizing more than two border and/or network elements may be employed. The method 300 proceeds to step 310 and ends.

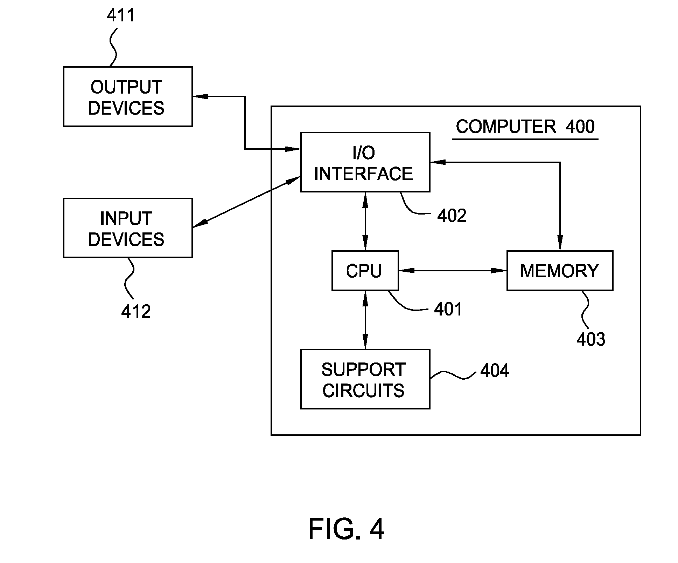

FIG. 4 is a block diagram depicting an exemplary embodiment of a computer 400 suitable for implementing the processes and methods described herein. The computer 400 may be used to implement the server 214 of FIG. 2. The computer 400 includes a central processing unit (CPU) 401, a memory 403, various support circuits 404, and an I/O interface 402. The CPU 401 may be any type of microprocessor known in the art. The support circuits 404 for the CPU 401 include conventional cache, power supplies, clock circuits, data registers, I/O interfaces, and the like. The I/O interface 402 may be directly coupled to the memory 403 or coupled through the CPU 401. The I/O interface 402 may be coupled to various input devices 412 and output devices 411, such as a conventional keyboard, mouse, printer, display, and the like.

The memory 403 may store all or portions of one or more programs and/or data to implement the processes and methods described herein. Notably, the memory 403 may store route selection software that selects an appropriate route from a plurality of prospective routes depending on congestion levels existing at a destination switch, as described above. Although one or more aspects of the invention are disclosed as being implemented as a computer executing a software program, those skilled in the art will appreciate that the invention may be implemented in hardware, software, or a combination of hardware and software. Such implementations may include a number of processors independently executing various programs and dedicated hardware, such as ASICs.

The computer 400 may be programmed with an operating system, which may be OS/2, Java Virtual Machine, Linux, Solaris, Unix, Windows, Windows95, Windows98, Windows NT, and Windows2000, WindowsME, and WindowsXP, among other known platforms. At least a portion of an operating system may be disposed in the memory 403. The memory 403 may include one or more of the following random access memory, read only memory, magneto-resistive read/write memory, optical read/write memory, cache memory, magnetic read/write memory, and the like, as well as signal-bearing media as described below.

An aspect of the invention is implemented as a program product for use with a computer system. Program(s) of the program product defines functions of embodiments and can be contained on a variety of signal-bearing media, which include, but are not limited to: (i) information permanently stored on non-writable storage media (e.g., read-only memory devices within a computer such as CD-ROM or DVD-ROM disks readable by a CD-ROM drive or a DVD drive); (ii) alterable information stored on writable storage media (e.g., floppy disks within a diskette drive or hard-disk drive or read/writable CD or read/writable DVD); or (iii) information conveyed to a computer by a communications medium, such as through a computer or telephone network, including wireless communications. The latter embodiment specifically includes information downloaded from the Internet and other networks. Such signal-bearing media, when carrying computer-readable instructions that direct functions of the invention, represent embodiments of the invention.

While the foregoing is directed to embodiments of the present invention, other and further embodiments of the invention may be devised without departing from the basic scope thereof, and the scope thereof is determined by the claims that follow.

## Claims

1. A method for redirecting at least one call setup message to avoid at least one congested link in a packet network, comprising:
routing said at least one call setup message for a conference call via a first link to a switch in communication with a conferencing component;
detecting a call blocking condition at said first link; and
redirecting said at least one call setup message via a second link to said switch.

2. The method of claim 1, wherein the packet network comprises an Internet protocol (IP) network.

3. The method of claim 1, wherein said conferencing component comprises at least one of: a software conference bridge or a hardware conference bridge.

4. The method of claim 1, wherein said call blocking condition comprises a busy condition.

5. The method of claim 1, wherein said switch serves as a sole connection between said conferencing component and said packet network.

6. The method of claim 1, wherein said second link is determined by a routing engine.

7. The method of claim 1, wherein said IP network comprises as least one of: a voice over IP network or a service over IP network.

8. A computer readable medium having stored thereon instructions that, when executed by a processor, causes the processor to perform a method for redirecting at least one call setup message to avoid at least one congested link in a packet network, comprising:
routing said at least one call setup message for a conference call via a first link to a switch in communication with a conferencing component;
detecting a call blocking condition at said first link; and
redirecting said at least one call setup message via a second link to said switch.

9. The computer readable medium of claim 8, wherein the packet network comprises an Internet protocol (IP) network.

10. The computer readable medium of claim 8, wherein said conferencing component comprises at least one of: a software conference bridge or a hardware conference bridge.

11. The computer readable medium of claim 8, wherein said call blocking condition comprises a busy condition.

12. The computer readable medium of claim 8, wherein said switch serves as a sole connection between said conferencing component and said packet network.

13. The computer readable medium of claim 8, wherein said second link is determined by a routing engine.

14. The computer readable medium of claim 8, wherein said IP network comprises as least one of: a voice over IP network or a service over IP network.

15. An apparatus for redirecting at least one call setup message to avoid at least one congested link in a packet network, comprising:
means for routing said at least one call setup message for a conference call via a first link to a switch in communication with a conferencing component;
means for detecting a call blocking condition at said first link; and
means for redirecting said at least one call setup message via a second link to said switch.

16. The apparatus of claim 15, wherein the packet network comprises an Internet protocol (IP) network.

17. The apparatus of claim 15, wherein said conferencing component comprises at least one of: a software conference bridge or a hardware conference bridge.

18. The apparatus of claim 15, wherein said call blocking condition comprises a busy condition.

19. The apparatus of claim 15, wherein said switch serves as a sole connection between said conferencing component and said packet network.

20. The apparatus of claim 15, wherein said second link is determined by a routing engine.
